# EUROPÄISCHE PATENTSCHRIFT

(11) **EP 0 735 445 B1**
(45) Veröffentlichungstag und Bekanntmachung des Hinweises auf die Patenterteilung: **30.05.2001**
(21) Anmeldenummer: 96104810.5
(22) Anmeldetag: 26.03.1996
(51) Int. Cl.: G05B 19/414, G05B 19/408

(54) **Verfahren zum Betrieb einer Werkzeugmaschine oder eines Roboters**
Method for the operation of a machine-tool or a robot
Procédé de mise en oeuvre d'une machine-outil ou d'un robot

(30) Priorität: 31.03.1995 DE 19512174
(43) Veröffentlichungstag der Anmeldung: 02.10.1996
(73) Patentinhaber: SIEMENS AKTIENGESELLSCHAFT, 80333 München (DE)
(72) Erfinder: Rossi, Gernot, 91245 Simmelsdorf (DE); Schmidt, Wolfgang, Dr., 91315 Höchstadt (DE)

(56) Entgegenhaltungen:
- EP-A- 0 250 597
- EP-A- 0 269 738
- EP-A- 0 371 143
- DE-A- 4 333 201
- US-A- 4 590 572

## Beschreibung

Die Erfindung bezieht sich auf ein Verfahren zum Betrieb einer Werkzeugmaschine oder eines Roboters mit unmittelbar zusammenwirkenden Hauptachsen sowie zusätzlichen Positionierachsen, wobei alle Achsen von einer numerischen Steuerung entsprechend einem satzweise gegliederten Teileprogramm mit Sollwerten für die auszuführenden Bewegungen versorgt werden.

Bei modernen Werkzeugmaschinen ist es nicht nur erforderlich, die Hauptachsen zu steuern, sondern es sind auch weitere Achsen, sogenannte Positionierachsen, zu berücksichtigen. Positionierachsen stellen eine Möglichkeit zur Programmierung paralleler Bewegungsvorgänge dar. Damit ist es also möglich, mindestens eine zweite Bewegung zur Werkzeug- und Werkstückhandhabung während der Hauptzeit auszuführen. Beispielhafte Anwendungsgebiete hierzu sind:
- Starten des Bewegungsvorganges eines Laders zur Werkstückentnahme bevor die Rückzugsbewegung des Werkzeugs auf eine sichere Position zum Stillstand gebracht würde,
- Steuerung einer Pinole,
- Positionierung eines neu einzuwechselnden Werkzeugs auf eine Werkzeugwechselposition parallel zum Bearbeitungsvorgang.

Bei mehrkanaligen Werkzeugmaschinensteuerungen war die Berücksichtigung von Positionierachsen bis dato nur möglich, wenn Haupt- und Positionierachsen in unterschiedlichen Kanälen gesteuert wurden (DE-OS 43 33 201). Dabei wurde der zeitliche Ablauf vom Positionier- und Hauptachsen durch eine Anpaßsteuerung, eine sogenannte PLC, gesteuert bzw. synchronisiert. Eine Synchronisierung von Positionier- und Hauptachsen im selben Interpolationstakt war dabei nicht möglich.

Ein Verfahren zum Vermeiden von Kollisionsgefahren bei Mehrspindeldrehmaschinen ist aus der EP-A-0 250 597 bekannt, wobei Wartebefehle zur Bewegungskoordination verwendet werden. Ferner ist aus der US-A-4 590 572 das gemeinsame Starten von Haupt- und Positionierachsen in jeweils einem NC-Satz bekannt.

Aufgabe der Erfindung ist es, ein Verfahren der eingangs genannten Art so auszubilden, daß sowohl Hauptachsen, als auch Positionierachsen gemeinsam programmiert werden können und nicht in mehreren Kanälen entkoppelt voneinander zu behandeln sind.

Gemäß der Erfindung wird diese Aufgabe gelöst, durch ein Verfahren zum Betrieb einer Werkzeugmaschine oder eines Roboters mit unmittelbar zusammenwirkenden Hauptachsen sowie zusätzlichen Positionierachsen, wobei alle Achsen von einer numerischen Steuerung entsprechend einem satzweise gegliederten Teileprogramm mit Sollwerten für die auszuführenden Bewegungen versorgt werden, wobei jeweils in einem Satz des Teileprogramms sowohl die Hauptachsen als auch die Positionierachsen entsprechend vorgegebener Parameter gestartet werden, wobei jedoch die folgenden Sätze des Teileprogramms auch dann ablaufen dürfen, wenn der startende Satz nur für die Hauptachsen abgearbeitet ist, sofern nicht ein gesonderter Wartebefehl im laufenden Teileprogramm die weitere Satzabarbeitung sperrt, bis der startende Satz auch bezüglich der Positionierachsen abgearbeitet ist, wobei ein gemeinsamer Interpolationstakt oder verschiedene Interpolationstakte zum Generieren der Sollwerte für die Hauptachsen und die Positionierachsen verwendet wird und wobei dann, wenn eine in Bewegung befindliche Positionierachse vom Teileprogramm mit neuen Parametern angesprochen wird, eine Fehlermeldung auslösbar ist.

Es werden also Positionierachsen gemeinsam mit Hauptachsen im gleichen NC-Satz programmiert. Weil kein Zusammenhang zwischen NC-Satzende und Ende der Positionierbewegung gegeben ist, wird durch einen gesonderten Wartebefehl ein Synchronisationsmechanismus zwischen Haupt- und Positionierachsen realisiert. Beim Stand der Technik konnten zwar Haupt- und Positionierachsen (Simulationsachsen) programmiert werden, jedoch über Satzgrenzen konnten diese Positionierachsen nicht verfahren werden. Der NC-Satz galt dann als beendet, wenn alle Bahn- und Positionierachsen ihren Zielpunkt erreicht hatten. Dadurch, daß ein gemeinsamer Interpolationstakt (IPO-Takt) zum Generieren der Sollwerte für die Hauptachsen und die Positionierachsen verwendet wird, ist eine Synchronisierung von Positionier- und Hauptachsen im selben IPO-Takt möglich. Ein äußerst sicherer Betrieb einer numerischen Steuerung wird dadurch gewährleistet, daß dann, wenn eine in Bewegung befindliche Positionierachse vom Teileprogramm mit neuen Parametern angesprochen wird, eine Fehlermeldung ausgelöst wird.

Ein Ausführungsbeispiel der Erfindung ist in der Zeichnung dargestellt und wird im folgenden näher erläutert. Dabei zeigen:
- FIG 1: die Struktur des Zusammenspiels einer numerischen Steuerung mit einer Werkzeugmaschine,
- FIG 2: ein erstes Teileprogramm mit resultierendem Zeit-Geschwindigkeitsverlauf und
- FIG 3: ein zweites Teileprogramm mit resultierendem Zeit- Geschwindigkeitsverlauf.

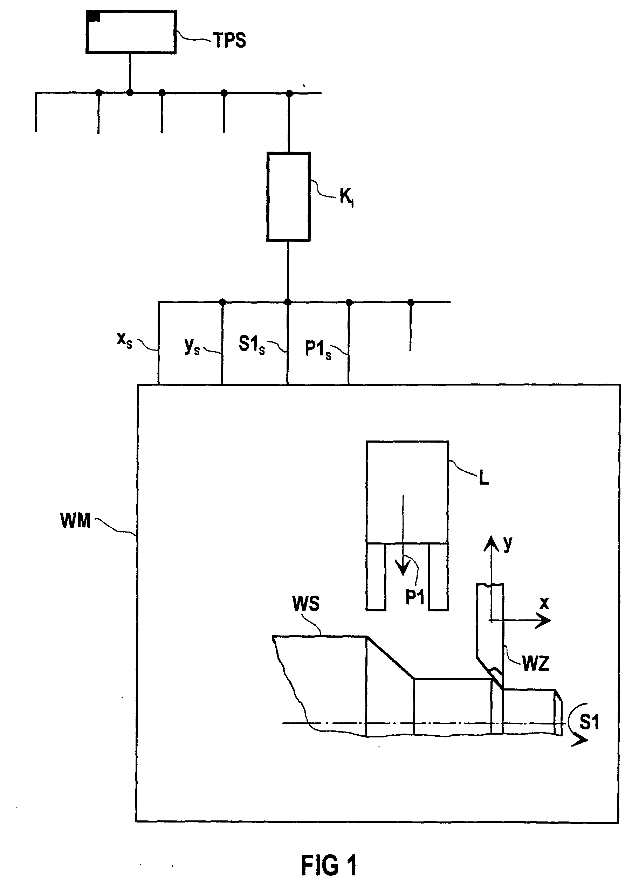

In der Darstellung gemäß FIG 1 ist in Form eines Blockschaltbildes angedeutet, wie aus einem Teileprogrammspeicher TPS einer der Übersichtlichkeit halber nicht weiter dargestellten numerischen Steuerung über einen Kanal Kᵢ der Steuerung Sollwerte für die auszuführenden Bewegungen der Aggregate eine Werkzeugmaschine WM ausgegeben werden. Bei der Werkzeugmaschine WM mag es sich dabei um eine Drehmaschine handeln, bei der ein Werkstück WS um eine Achse S1 gedreht wird und wobei ein Werkzeug WZ, in diesem Fall ein Drehmeißel, in zwei Achsen x und y positioniert wird. Die Sollwerte für die Bewegungen der Achsen S1, x und y werden über die numerische Steuerung als Werte xₛ, yₛ und S1ₛ aus demselben Kanal Kᵢ geliefert, der dann auch Sollwerte P1ₛ für die Position P1 eines Laders L, bei dem es sich um einen Werkzeuglader handeln möge, liefert. Selbstverständlich können noch weitere Achsinformationen von der numerischen Steuerung an die Werkzeugmaschine WM gegeben werden, wie dies durch offene Ausgänge am Kanal Kᵢ angedeutet ist. Ebenso soll das offene Netzwerk hinter dem Teileprogrammspeicher TPS und dem Kanal Kᵢ und darauf hindeuten, daß auch weitere Kanäle der numerischen Steuerung für andere Steuerungszwecke zur Verfügung stehen. Zunächst sei angenommen, daß der Wunsch bestehen möge, daß zwar die Hauptachsen x und y wie auch die Positionierachse P1 gemeinsam gestartet werden, daß jedoch dann unverzüglich nach Beendigung der ausgelösten Bewegungen für die Hauptachsen der nächste Satz des Teileprogramms fortgeführt werden kann, ohne daß zuerst die Beendigung der Bewegung der Positionierachse P1 abzuwarten wäre.

Programmtechnisch könnte das, wie folgt so aussehen:

| | | |
|---|---|---|
| N10 G01 X100 Y 100 F 100 | POS A[P1]=50 | F[P1]=2000 |
| N20 G01 X200 Y200 | | |
| N30 G01 X300 Y300 | POS A[P1]=100 | |

Dies heißt, daß in einem ersten Satz N10 zunächst mit der Kennung G01 angegeben wird, daß eine Linearbewegung der Hauptachsen erfolgen soll. Durch die Parameter X100 und Y100 wird die anzufahrende Position angegeben und mit F1000 wird die Geschwindigkeit der Bewegung definiert. In diesem Satz N10 wird jedoch nun ein Zusatzkriterium eingeführt, das im Beispiel als POS A angibt, daß die im folgenden spezifizierte Positionierachse P1 zwar mit dem Satz N10 gestartet wird, jedoch unabhängig von der weiteren Programmabfolge weiterbewegt wird, bis ein durch POS A [P1] = 50 definierter Ort "50" der Positionierachse P1 erreicht ist. Durch F [P1] = 2000 wird die Geschwindigkeit der Positionierachsbewegung definiert.

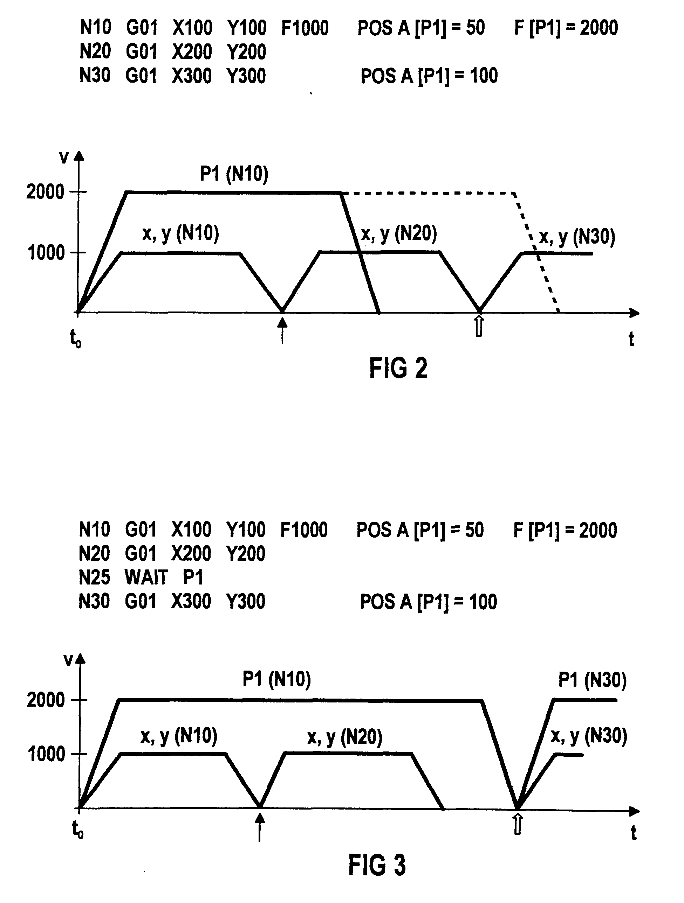

In einem nächsten Satz des Teileprogramms, d.h. im Ausführungsbeispiel einem Satz N20, kann dann angegeben sein, daß durch eine weitere Linearbewegung mit gleichbleibender Geschwindigkeit die Hauptachsen x und y auf Werte X200 und Y200 zu verfahren sind. In einem weiteren Satz des Teileprogramms, d. h. einem Satz N30, kann dann angegeben sein, daß durch eine weitere Linearbewegung mit gleichbleibender Geschwindigkeit die Hauptachsen x und y auf Werte X300 und Y300 zu verfahren sind. Ferner kann durch POS A [P1] = 100 eine neue anzufahrende Position der Positionierachse P1 vorgegeben werden. Der resultierende Zeit-Geschwindigkeitsverlauf v = f (t) ist in FIG 2 dargestellt. So ist ersichtlich, daß zur Zeit t₀ sowohl die Bewegungen der Hauptachsen x und y als auch der Positionierachse Pl gestartet werden.

Die gekoppelten Hauptachsen x und y werden gemäß der Information des Satzes N10 mit Geschwindigkeit "1000" so bewegt, daß die Werte X100 und Y100 erreicht werden. Bei Erreichen dieser Werte kann - aber muß nicht - eine Geschwindigkeitsabsenkung vorgenommen werden. Typisch ist jedoch, daß mit dem Erreichen der angestrebten Position der Hauptachsen des Satzes N10 unverzüglich der nächste neue Satz, in diesem Fall der Satz N20 gestartet wird. Dies ist in der Darstellung durch einen einfachen Pfeil angedeutet.

Nach Beendigung des Satzes N20 beginnt dann der Satz N30, wie dies in der Darstellung durch einen offenen Pfeil angedeutet ist. Wenn die Positionierachse P1, wie durch eine durchgezogene Linie symbolisiert, innerhalb des Satzes N20 ihre Bewegung ausgeführt hat, ist dies für den eingangs geschilderten Bewegungsablauf problemlos. Wenn jedoch die Positionierachse, wie durch eine gestrichelte Linienführung angedeutet ist, noch in Bewegung ist, sofern der Satz N30 gestartet wird, liegt ein Kollisionsfall vor, da die Positionierachse ihre Position noch nicht erreicht hat aber im Satz N30 bereits eine weitere Position vorgegeben wird.

Dieser Wechsel kann gemäß einer zweckmäßigen Ausgestaltung der Erfindung durchaus signalisiert werden, jedoch ist es wesentlich für die Hauptidee der Erfindung, daß eine derartige Kollision gar nicht erst eintritt. Die hierzu erforderlichen Maßnahmen werden im Zusammenhang mit FIG 3 geschildert.

Ausgegangen wird von folgender Programmabfolge:

| | | |
|---|---|---|
| N10 G01 X100 Y100 F1000 | POS A[P1]=50 | F[P1]=2000 |
| N20 G01 X200 Y200 | | |
| N25 WAIT P1 | | |
| N30 G01 X300 Y300 | POS A[P1]=100 | |

Die Programmabfolge der Schritte N10 und N20 ist damit unverändert gegenüber dem vorigen Beispiel angenommen, jedoch wird vor Beginn des ebenfalls unveränderten Satzes N30 ein Satz N25 eingeschaltet, der durch seine Information WAIT P1 sicher-..... stellt, daß der folgende Satz nicht eher begonnen werden kann, als bis die Positionierachse P1 die im Satz N10 geforderte Bewegung ausgeführt hat. Dies Verhalten führt zu einem Bewegungsablauf, wie er im Zeit-Geschwindigkeitsdiagramm von FIG 3 angedeutet ist. Signifikant für diesen Verlauf ist dabei eine Verlagerung des Startzeitpunktes für den Satz N30 dahingehend, daß dieser Zeitpunkt - durch einen offenen Pfeil symbolisiert - erst dann vorliegt, wenn die zuvor ausgelöste Positionierbewegung abgeschlossen werden.

## Patentansprüche

1. Verfahren zum Betrieb einer Werkzeugmaschine oder eines Roboters mit unmittelbar zusammenwirkenden Hauptachsen sowie zusätzlichen Positionierachsen, wobei alle Achsen von einer numerischen Steuerung entsprechend einem satzweise gegliederten Teileprogramm mit Sollwerten für die auszuführenden Bewegungen versorgt werden, wobei jeweils in einem Satz (N10) des Teileprogramms sowohl die Hauptachsen (x,y) als auch die Positionierachsen (P1) entsprechend vorgegebener Parameter gestartet werden, wobei jedoch die folgenden Sätze (N20) des Teileprogramms auch dann ablaufen dürfen, wenn der startende Satz (N10) nur für die Hauptachsen (x,y) abgearbeitet ist, sofern nicht ein gesonderter Wartebefehl (WAIT) im laufenden Teileprogramm die weitere Satzabarbeitung sperrt, bis der startende Satz (N10) auch bezüglich der Positionierachsen (P1) abgearbeitet ist, wobei ein gemeinsamer Interpolationstakt oder verschiedene Interpolationstakte zum Generieren der Sollwerte für die Hauptachsen (x,y) und die Positionierachsen (P1) verwendet wird und wobei dann, wenn eine in Bewegung befindliche Positionierachse (P1) vom Teileprogramm mit neuen Parametern angesprochen wird, eine Fehlermeldung auslösbar ist.

## Claims

1. Method for the operation of a machine tool or a robot with directly cooperating principal axes and additional positioning axes, with all axes being supplied by a numerical control corresponding to a part program, arranged in blocks, with desired values for the movements to be carried out, with in each case in one block (N10) of the part program both the principal axes (x,y) and the positioning axes (P1) being started according to specified parameters, with, however, the following blocks (N20) of the part program also being permitted to run if the starting block (N10) is processed only for the principal axes (x,y), provided a separate waiting command (WAIT) in the running part program does not block the further block processing, until the starting block (N10) is also processed with respect to the positioning axes (P1), with a common interpolation cycle or different interpolation cycles being used to generate the desired values for the principal axes (x,y) and the positioning axes (P1) and with an error message being able to be triggered if a positioning axis (P1) in motion is operated by the part program with new parameters.

## Revendications

1. Procédé pour faire fonctionner une machine-outil ou un robot à axes principaux coopérant directement ainsi qu'à axes de mise en position supplémentaires, tous les axes étant alimentés par une commande numérique en fonction d'un sous-programme subdivisé par blocs en valeurs de consigne pour les déplacements à exécuter, chaque fois tant les axes (x, y) principaux que les axes (P1) de mise en position, étant, dans un bloc (N10) du sous-programme, démarrés en fonction de paramètres prescrits, mais les blocs (N20) suivants du sous-programme devant se dérouler même si le bloc (N10) à démarrer n'est traité que pour les axes (x, y) principaux, dans la mesure où une instruction (WAIT) d'attente particulière dans le sous-programme en cours ne bloque pas la poursuite du traitement des blocs, jusqu'à ce que le bloc (N10) démarrant soit traité aussi du point de vue des axes (P1) de mise en position, un cycle commun d'interpolation ou divers cycles d'interpolation étant utilisés pour générer les valeurs de consigne pour les axes (x, y) principaux et les axes (P1) de mise en position et un message d'erreur pouvant être déclenché si un axe (P1) de mise en position se trouvant en mouvement est sollicité par le sous-programme avec de nouveaux paramètres.
